# EUROPEAN PATENT APPLICATION

(11) **EP 2 407 857 A2**
(43) Date of publication of application: **18.01.2012**
(21) Application number: 09460051.7
(22) Date of filing: 20.11.2009
(51) Int. Cl.: G06F 3/023

(54) **The method of data inputting into digital devices, stationary and mobile and the keyboard for data inputting into digital devices, stationary and mobile**

(30) Priority: 20.11.2008 PL 38657008
(71) Applicant: Adamski, Michal, 91-164 Lodz (PL)
(72) Inventor: Adamski, Michal, 91-164 Lodz (PL)

(57) **Abstract**

The invention comprises the new method of data inputting into digital devices and the keyboard adjusted to this method.

The method of data inputting into digital devices is innovative by using of up to five sign electrical switches situated within the reach of fingers of each operator's hand /1 ,2/ pressed either separately or with register electrical switch(es) and by using of up to four register electrical switches /3/, changing the role of sign electrical switches when pressed together with sign electrical switches, situated within the reach of thumbs of each operator's hand, activated in the number of up to four at once by one thumb and, by simultaneous use of both thumbs, in the number of up to eight at once.

The keyboard for data inputting into digital devices is divided into two separate pieces /4, 5/. Each piece of the keyboard consists of thigh plate /7/ connected by ball joint to basal plate /6/, on which a palm plate /8/, sign panel /9/, register panel /10/ and pointing device /16/ are assembled. Within the reach of fingers of each operator's hand there are up to five sign keys /11, 12, 13, 14, 15/ mounted on a sign panel /9/ and up to four register keys /17, 18, 19, 20/ mounted on a register panel /10/ placed angularly to sign panel /9/. Position and angles of keyboard parts are in some models adjustable. The keyboard comprises pointing device /16/ built in permanently or in a detachable way, localized within the reach of operator's fingers. Keyboard enables to activate up to 256 registers, which contain up to 2560 signs.

Proposed method and adjusted to it keyboard (with several versions, models, modifications and variations) improve ergonomics, functionality, elasticity and comfort of keyboard usage in different operator's body positions, as well as during motion. Possibility of registers content visualization on screen of digital device and self-dependent edition of registers by use of dedicated software enables sightless touchtyping and allows creating user's own keyboard layouts adjusted to profession, preferences and activity. It also enables operation by disabled persons.

The above mentioned features of the solution are not a compromise with habits of users of standard keyboard. The solution remains with agreement with sign or register-sign method of data inputting typical for standard keyboard, proposing additionally, as one of possibilities, adaptation of keyboard layout, which is based on Qwerty standard. Other keyboard layouts (mobile, vowel-consonant, mnemotechnic, multilingual, East Asian, phonetic, syllabic or for disabled people) are also possible to quick introduction. Composing user's own layout is easy and learning of new layout - quick, thanks to dedicated software, showing signs of activated register on screen, passing fluently to layout edition mode, establishing register keys hierarchical dependence and changing of keyboard settings. User can transfer his keyboard layout using any digital carrier; layout can also be sent by net or wireless connection, giving user the ability of installing his own, unique layout on different digital devices.

## Description

The subject of the invention is the method of data inputting into digital devices, stationary and mobile, and the keyboard for data inputting into digital devices, stationary and mobile. The keyboard enables its usage in different operator's body positions and during moving, as well as usage by disabled people.

The method being the subject of the invention consists in activating several register keys (elsewhere called modifiers or special keys) with single pressing of a thumb or two thumbs, which enables operation on big number of registers, diminution of the number of sign keys and usage of the keyboard with totally sightless method (real touchtyping). The second essential component of the invention is special method of visualizing of the register content on the screen of digital device, with which the keyboard communicates. The above features induce the improvement of functionality, ergonomics and flexibility (the operation in different body positions and while moving) and enables operation by people with different types of disability: loss of finger(s) or hand(s), pareses, as well as during illnesses requiring lying position.

The keyboard being the subject of the invention, with its several versions, models, modifications and variations serves, along with the usage of dedicated software, for inputting to the digital device: alphanumeric signs, special signs, graphic signs, functions, commands, cursors, series of signs, macros, texts. Keyboard can be used with digital devices, professional and personal, in that number with stationary devices (personal computer, game console, audiovisual equipment) as well as with mobile devices (notebooks, palmtops, mobile multimedia players: CD, DVD, Blu-ray, mp3, mp4), mobile phones and other digital equipment.

Typewriter with alphanumeric keyboard was patented in year 1868. Soon after this event a layout of signs was introduced and accepted; its name Qwerty was derived from the letters present at the beginning of the upper row of letter part of keyboard. In the second half of XX century Qwerty layout was moved to computer field, being at first used in computer terminals and next in keyboards of personal computers. As soon as at the beginning of typewriter era it was noticed that elevated hands of operator were getting tired and maximal lowering of typewriter position was suggested. In similar position computer keyboards should be located. As the place for computer keyboard, drawers mounted under the desk are popularized. They are not lowering the keyboard sufficiently and, worse, many people use their keyboards lying on the top of the table or office desk, suffering from highly elevated forearms, leaning distal epiphyses of forearms bones on the desk and deflecting of wrists upwards and sidewards. Forced position of hands leads to quick tiredness during the job, generating carpal tunnel syndrome and degenerative alterations. Inventors were aware of keyboard drawbacks and tried to improve it. Among Polish and foreign inventions of XX/XXI century breakthrough occurred a number of those, which tried to make the keyboard job more comfortable and more ergonomic.

It is known from Polish patent pending no. P-297648 the keyboard which gives many different signals as the result of different way of operating. Signal in terms of the invention is each event leading to arouse, which means to get a specified sign in the computer. Signs may be not only letters, but also syllables and words.

Another, known from Polish description of patent pending no. P-316678 keyboard set for computer consists of palettes moving in relation to each other between their closed (packed) and opened (working) positions. Shifting mechanism changes the position at least one of palettes against another in aside direction and subsequently in perpendicular direction in relation to aside direction.

It is known from Polish patent pending no. P-330175 positional computer keyboard with multi-button keys, having nest keys, localized under four fingertips of average man placed in natural position. Each of nest keys has got in the middle a parking button pressed downwards (main button) and placed in the immediate nearness of parking button in four main directions associated buttons switched on by slight shift of fingers held on the parking buttons or switched on by making a directional pressing on the parking button, reacting on the buttons placed on its four sides.

It is known from Polish patent pending no. P-337784 a numeric, modular keyboard, equipped with keys and/or sensors, enabling data inputting, especially to miniaturized computer devices with the aim of its further processing. The keyboard has got the shape of elongated and flat rectangular cuboid with dimensions similar to standard numeric keyboard for data input. The keyboard is divided spatially to connected with each other mechanically and functionally separate modules, which after folding and/or slipping on each other create a block having shape similar to rectangular cuboid but with diminished bed plate and height close to multiplicity of side wall height of module.

It is known from polish patent pending no. P-366450 an invention of Polish keyboard containing an additional row of keys with Polish letters and some commands, placed between the row of digits and the upper row of letters. Pressing one of additional letter keys causes connection of the wire corresponding to RightAlt key and the wire from adequate letter of alphabet.

On the contrary, computer mathematical keyboard, known from Polish patent pending no. P-372672, has no printed stable symbols on its keys, identifying its function, but there are placed displays on them. Signs shown on displays play the role of symbols, while on each display can be visualized any symbol, for which resolution allows. Function assigned to each key can be changed.

It is known from US patent no. 3945482 from 1976 year a keyboard comprising keys divided in two parts: vowel part and consonant part, with keys turned by angle reducing compulsory side deflection of palm in wrist articulations, as well as semicircular bending of key rows, adjusting them to fingertips positions.

From US patent no. 4833446 from year 1989 and no. 5642108 from year 1997 a chordic keyboard is known containing much less keys, practically as many as hand fingers plus some additional register keys under thumbs. Letters, other signs, cursors and commands are activated by pressing a specified combination of keys, called chord, which demands a simultaneous use of up to several fingers. Inputting of signs by simultaneous employment of a few keys is a different method than introducing signs on standard keyboard, where one key is pressed, sometimes also with a modifier (register) key or keys, pressed with thumb or little or ring finger.

On the other hand, there is known from US patent description no. 5993089 from year 1999 a keyboard similar to chordic, designed in the intention of creator for people disabled, making accessible only four keys under each hand, operated with four fingers, without the little one. It duplicates earlier known 8-bit Braille's alphabet in a miniaturized computer keyboard.

Reconciliation of traditional keyboard layout with other than till then known access to such sets of signs as symbols, digits, lower and upper index digits is seen in US patent description no. 2005/0180794, in which it was achieved by augmenting of the possibilities of further registers launching under the letter keys. The keyboard comprises traditional letter keyboard layout set in few rows, only numeric row was omitted. Construction of keyboard shows, that the author noticed the necessity of limiting keys amount in contemporary keyboards.

The keyboard known from US patent description no. 2008/0001787 has got keys of typical Qwerty keyboard made of light-emitting diode matrices, which enables reprogramming of keys to other alphabet with simultaneous display of new signs on keys surface.

On the other hand, the keyboard known from US patent description no. 2005/0122313 comprises an empty touch screen or membrane with sensors in aim of defining an optimal fingertips positions and localizing in those places keys of main row. Placing of keys from upper and lower row is a geometric expanding of main row localization. The used solution indicates the reasonability of placing keys under fingertips, which forms a kind of arch on plane surface, not a straight line present in standard keyboard.

Some constructors built little devices held in closed hand, equipped in small number of keys operated by one hand, called in English "keyers". Examles of such solutions can be Septambic Keyer, having three thumb keys and four keys under other fingers, as well as commercially produced Twiddler with six thumb keys and twelve others. In both systems signs are input using chordic method with possible un-chordic use of thumb keys actuating additional registers. In US patent no. 7170430 from year 2007, one provides introduction of signs with keyer by pressing five keys with one hand in a chordic manner and additionally using three time-dependent ways: single longer press of a key, two pressings following quickly one after another or two fast pressings with longer holding of keys.

US patent no. 4891777 from year 1990 refer to small keyboard similar to cell phone keyboard, intended to be operated with one hand. It has closely located keys, wherein pressing of single key or pressing at once two - three keys lying nearby enables achieving different signs. This is an example of device which exploits simultaneous pressing with one finger of a few neighboring sign (non-register) keys.

In year 2003 with the number US 6670894 a patent was obtained for invention of gloves with six register keys mounted on thumbs and sign keys placed on other fingers. In this solution register keys respond to rows of keyboard and are pressed singularly with adequate sign key. The author applies additionally numerous sensors located on successive phalanges of fingers, actuating non-alphanumeric commands.

In US patent no. 7202853 from year 2007 an activation of Qwerty type keyboard is proposed on a minimized device with 10 keys. In this method a half of each Qwerty keyboard row is actuated by one of fingers: for example under middle finger of left hand letters ASDFG would be present, and under index finger of right hand - BNM. This is in fact turning of Qwerty keyboard by 90 degrees, which, despite assurance of the author about the possibility of utilizing Qwerty keyboard habits, seems to be quite complicated.

The system of registers being shown on the screen was implemented in US patent no. 4333097 from year 1982. Its 10-keys-keyboard visualizes on screen the row of currently available signs. Shifting to other lines was achieved by pressing several times of two keys under thumb (Up an Down). Achieving of a specific letter demanded pressing of thumb key in each case different number of times, depending on how far from needed letter was the line with letter lately written. Sightless, memorized touchtyping was in this method impossible.

The possibility of keyboard displaying on the screen exists in operating system Windows. In this case entire keyboard is shown (all rows). There is also possibility of showing signs hidden under modifiers. The system serves, in authors intention, to input signs using pointing device instead of keys, mainly by disabled with motoral dysfunction.

At the origin of this invention several remarks occurred related to functionality and ergonomics of Qwerty-type contemporary keyboards, which will further be called "standard keyboards":
- standard keyboards contain big number of keys (100-120) and significant amount of keys is situated out of reach of fingers placed on the basal key row, which obstruct touchtyping worked out for mechanical typewriter counting 44 keys;
- necessity of glancing on standard keyboard causes, that its placing in a low, comfortable position is rarely used;
- lifting of forearms to the horizontal line or even higher enforces wrists to lie on the desk surface, which can cause degenerative changes in: distal epiphyses of forearm bones, shoulder articulations, and cervical-thoracic spinal column;
- lifting of palms higher than forearm bones leaned on the desk causes excessive tension of muscles abductors of palm, leading by longer work to tiredness and carpal tunnel syndrome, and repetitive strain syndrome of wrist;
- standard keyboard enforces to place hands close to each other with side abduction of wrists, which intensify non-physiological lie of hands on keyboard;
- operating of mouse or trackball lying on the desk causes non-physiological position of forearms and palms, similar to the one during keyboard using;
- standard keyboards are not produced without description on the keys, because keyboard user often has to glance at it; keys rarely used and distant from alphabetic keys are never pressed sightlessly;
- acceptance by society of Polish computer users of the keyboard system called programmer layout gives evidence of mans ability to adjust for inputting some letters with use of register key;
- using programmer layout on Qwerty keyboard causes 7-8% of Polish text to be input with Right Alt, despite difficult usage of this key with strongly bent thumb;
- introducing of system commands, application functions and some signs on standard keyboard using so called key shortcuts require pressing of one or two register keys together with sign key and is widely accepted and even recommended;
- digital devices users represent different professions and interests, therefore they need different keyboard layouts; even the same man, depending on the aim of keyboard using, can temporarily need different layouts, best fitted to the given task and as comfortable as possible for execution of specific actions;
- people with lack of or pareses of hands, as well as after finger amputations need special built of standard keyboard and pointing devices driven by head or eyes.

The aim of this invention was enabling of thoroughly sightless touchtyping on keyboard, achieving comfort of work through lower location of keyboard as well as improving of ergonomics, especially by obtaining a proper position of hands during operation on keyboard. On the other hand, technical task which was stated was elaborating construction of keyboard adjusted to sightless data inputting into digital devices, stationary and mobile, determining the number of sign keys and register keys enabling for transfer of required number of signals and functional dislocating of sign keys and register keys on the keyboard. Additional problem was adjusting of keyboard to the needs of people with different size and shape of hands (various finger length) and to the needs of disabled, including also building of keyboard models for operation in different positions of man's body.

The subject of the invention is the method of inputting data into digital devices, stationary and mobile, having installed computer software and pointing device, using sign electrical switches and, changing the role of sign electrical switches, register electrical switches, activated with four fingers and thumb of each operator's hand, which, according to the invention, uses of up to five sign electrical switches, situated within the reach of four except thumb fingers of each operator's hand, pressed either separately or together with register electrical switch(es), and characterized by using register electrical switches changing the role of sign electrical switches, situated, in the number of up to four, in the reach of thumbs of each operator's hand, activated in the number of up to four by single press of a thumb or up to eight by simultaneous pressing of both thumbs. The method further uses pointing device built in permanently or in a detachable way, operated by electrical switches. The method is using a dedicated software installed in the digital device.

Operating of sign electrical switches, mounted preferably on two separate pieces of keyboard designed for each operator's hand, within the reach of little, ring, middle and index fingers does not require any visual control of switches. It is possible to actuate two sign electrical switches by index finger. Operation of the rest of sign electrical switches, situated within the reach of little, ring and middle fingers do not require to move fingers to other sign electrical switches.

Operating of register electrical switches, changing the role of sign electrical switches, mounted preferably on two separate pieces of keyboard designed for each operator's hand, in groups inside which up to four register electrical switches, changing the role of sign electrical switches, is possible to actuate by single press of a thumb, which enables, by simultaneous use of both thumbs, activating of one of 2ⁿ registers, where n is the total number of applied register electrical switches in both pieces of the keyboard.

In the proximity of electrical switches, within the reach of operator's fingers, there is a pointing device, built in one or both pieces of the keyboard, permanently or in a detachable way, while one or more electrical switches can play the role of pointing device button(s) and/or the role of electrical switch(es), depending on program settings.

As an electrical sign or register switch a key is used built as mechanical electric contact switch, reed switch, optoelectronic element, or touch/stress sensor. As a pointing device a mouse or trackball, or joystick, or touchpad is used.

In the digital device a dedicated computer software is installed, which on the screen of digital device, stationary or mobile, displays the content of register corresponding to pressed register electrical switch or combination of register electrical switches, facilitates learning of signs layout, searching and inputting signs, enables edition of registers content and edition of functioning settings of the whole set of electrical switches and allows to be adjusted for operation by people with disabilities of one or more fingers or the whole hand.

The keyboard according to this invention is used for inputting data into digital devices, stationary and mobile, having installed any computer software and a pointing device. The keyboard consists of sign keys and register keys, according to the invention characterized by the fact that it is set up of two preferably separate pieces and each piece of keyboard contain thigh plate, connected by ball joint to basal plate and it consists of mounted on basal plate: palm plate, sign panel and register panel, while in the reach of fingers of each operator's hand there are up to five sign keys, located in one semicircular row on sign panel and up to four register keys, located on register panel, changing the role of sign keys, grouped in the reach of thumbs of each operator's hand in the way that up to four register keys can be activated by one thumb press, which by simultaneous use of two thumbs causes activation of one of 2ⁿ registers, where n is the applied number of register keys in both pieces of keyboard, as well as it is equipped in pointing device, built in permanently or in a detachable way, operated by sign keys and/or register keys, while keyboard is cooperating with dedicated software installed in digital device, using for connection with digital device any kind of wire or wireless method.

Up to four keys inside the group of register keys and/or two sign keys, being in the reach of index finger, have got features enabling for their spatial and palpable identification, such as different position and/or different texture, and/or different shape, and/or special construction inside the group, which enables sightless pressing with one thumb of up to four register keys at a time or with one index finger of up to two sign keys.

The keyboard has got sign keys situated under little, ring and middle fingers in the way which does not require moving fingers to another sign keys, enabling sightless pressing of sign keys. The rest of sign keys, activated also sightlessly, are situated in two groups of two keys in the reach of each index finger, which requires to move index finger while choosing sign key or which requires programmatic switching off of one key situated in the reach of index fingers.

The keyboard has got built in, in one or both pieces, permanently or in a detachable way, a pointing device in form of trackball or mouse, or touchpad, or joystick. The keyboard cooperates with pointing device using one or several sign and/or register keys, designed programmatically for temporary or permanent cooperation with pointing device.

The keyboard cooperates with dedicated software, which on the screen of digital device, stationary or mobile, displays signs corresponding to sign keys, being present in register corresponding to register key or combination of register keys being pressed, facilitates learning of sign layout, searching and inputting signs, enables edition of registers content and edition of functioning settings of the keyboard and allows to be adjusted for operation by people with disabilities of one or several fingers, or hand.

The keyboard is built in different sizes and/or with mechanism allowing for adjustment of the position and angles of sign panels, and/or mechanism allowing for adjustment of the position and angles of register panels, and/or with adjusted positions of sign keys on sign panel, and/or with adjusted positions of register keys on register panel, and/or with the system of mounting of palm plate on basal plate, and/or with the ball joint consisting of yoke and ball stud enabling for movability of basal plate against thigh plate. Keyboard with above described mechanisms can be placed in different places: on a low table, on operator's thigh, under operator's thigh, can be fixed on armchair armrests, can lie on bed surface of ill person, can as well be fixed to operator's thighs and used during displacement of operator.

In another embodiment the keyboard contains sign keys and register keys fastened to the cloth of gloves in the reach of fingertips, inside or outside of the gloves while pointing device, preferably mouse, is mounted to the cloth of gloves in central region of palm. Other mobile embodiments can have sign and register keys mounted in a car in the reach of driver's hands, preferably on steering wheel, or at motorcycle or bicycle, mounted preferably on handle-bar.

In the next embodiment, keyboard has got sign keys and register keys mounted on a plate being inserted to the pocket of operator's clothing or fastened in operator's pocket permanently and it is equipped in pointing device, preferably joystick. Similar embodiment of the keyboard is fastened to operator's clothing in the way, that sign keys and register keys as well as the indicating device, preferably joystick, are seen on the outer side of clothing or they are felt under the surface of clothing in a convenient place, preferably in the region of upper part of thigh at the frontal-outer side.

The keyboard embodiment for inputting data into digital devices using feet, equipped in computer software and pointing device, containing sign keys and register keys, is characterized by having from three to ten big sign keys, designed to be operated with one foot of operator and contains from two to four big register keys, designed to be operated by the second foot of operator with possibility of simultaneous activating up to four register keys with one foot press. Pointing device, preferably trackball, is mounted to the keyboard permanently or temporarily. The keyboard cooperates with dedicated software, which on the screen of digital device displays corresponding to sign keys signs existing in the register corresponding to pressed register key or combination of register keys, facilitates learning of signs layout, searching and inputting of signs, enables edition of registers content and edition of functioning settings of the keyboard, and allows adjustments of the keyboard to permit operating by persons having disabled or absent hands or people who can not use hands during the work with keyboard.

The most essential from two most important innovative features of the invention is special construction of keyboard, consisting in grouping of register keys in one place, within the reach of thumbs, which enables pressing by one thumb of up to four register keys simultaneously. Synchronous usage of two thumbs enables actuating any key combination among the global number of eight register keys, which causes activation of one from 256 registers. This number of registers permits for substantial decrease of the number of signs in each register, and in consequence drop of the number of sign keys on keyboard.

The second from two most important innovative features of invention is the system of visualizing register content on the screen of digital device, which works the whole time during keyboard operating, moving the informational task of keys overprints to the screen of digital device. Both basic features of keyboard enable introducing further innovations, which guarantee total sightlessness of operation, improve ergonomics and functionality, ease individual learning of sign layout and create elasticity of keyboard use in various circumstances and different positions of operator's body, and also allow keyboard adjustments necessary for operation by disabled people.

The subject of the invention is shown on the following figures, where fig. 1 shows the method of inputting data to digital device, fig. 2 - method of pressing of the group of three register keys, fig. 3 - method of pressing of the group of four register keys, fig. 4 - general view of the example of keyboard realization called main model, fig. 5 - movability of basal plate of main model of keyboard, fig. 6 - methods of fastening of thigh plate, fig. 7 - movability of sign panel of main model of keyboard, fig. 8 - movability of register panel of main model of keyboard, fig. 9 - modification of main model of keyboard, comprises possibility of optional coupling of two pieces of keyboard and of pointing device panel, fig. 10 - sign and register panels of universal model of keyboard equipped in shifting keys, fig. 11 - gloves model of keyboard, fig. 12 - pocket model of keyboard, fig. 13 - clothing model of keyboard, fig. 14 - foot model of keyboard, fig. 15 - variations of two register keys group build, fig. 16 - variations of three register keys group build, fig. 17 - variations of four register keys group build.

Similarly to Qwerty-type computer keyboards, called standard keyboards, keyboards made exemplarily according to the invention serve for inputting to any digital device: alphanumeric signs, special signs, graphic signs, functions, commands, cursors, sets of signs, macros, texts, which in this patent application are called signs. Under the term of digital device there is meant any kind of digital equipment: professional or personal, of general use or specialized, among them stationary devices like personal computer, game consoles, audiovisual equipment, as well as mobile devices like notebooks, palmtops, mobile multimedia recorders and players (CD, DVD, Blu-ray, mp3, mp4), cell phones, navigation equipment and the like.

The invention involve a new method of sign inputting from keyboard to digital device and new kind of keyboard with its models, versions, modifications and variations of build together with the algorithm of dedicated computer software work.

The invention is leaned on the above mentioned remarks, which led firstly to think out such a method of signs inputting, which enables reduction of the number of keys, dividing of keyboard to two pieces, for each operator's hand, placing keys destined to press with thumb at the angle of about 90 degrees in relation to the plane of keys for other fingers. These changes and construction of panels with their adjustability method, as well as leaning of operator's soft part of hand on palm plate enable in consequence improving ergonomics by assurance of totally sightless operation, enable hands work in the position which does not cause muscles tension and in further consequence enable operation in various body positions, during operator's displacement, as well as by people with fingers or hands disabilities.

The method of inputting signs consists of utilizing only one row of sign keys and enlarged, comparing to standard keyboard, number of register keys. Register keys are assembled closely in two groups, in the reach of both thumbs. Such placing of keys, and possibly also texture of their surface, shape and construction of keys group enable activating several register keys at a time by means of one thumb pressing. It is possible to press in that way not only one register key, but two, three or four at once. Simultaneously, with the thumb of the other hand, other register keys can be pressed. The use of one or two thumbs enables actuating of register keys combinations in the number of 2ⁿ (two raised to the power of the register keys number - n). The rest of both hands fingers, resting on the single row of sign keys, enables inputting from one register of up to 10 signs (up to 5 by one hand). Each combination of pressed register keys changes the rple of sign keys, which means that another register is activated. Each further register contains the next chunk of ten signs, so the maximum sign number possible to be introduced to the digital device from the keyboard is multiplication by 10 of the number of registers: 10*2ⁿ. In different versions of keyboard the number of register keys may vary from 2 to 8. These versions, dependently on the number of register keys bear letter symbols: A - 2 register keys, B - 4 register keys, C - 6 register keys, D - 8 register keys.

Sign keys are pressed singularly, which means, that signs are input to digital device by pressing of a single sign key (not combination of sign keys) or by pressing of a single sign key with register key or with several register keys. This method is similar to the way used in standard keyboard. The difference in relation to standard keyboard rest in the possibility of pressing a bigger number of register keys by means of a single press, which was achieved by grouping register keys under two thumbs and abandoning of register keys duplication on both sides of keyboard, as it is present in standard keyboard. On the other hand, sign keys are not pressed several at a time, which differentiate the invention from chordic method of sign inputting. Realizing that Qwerty standard is well grounded, author decided to make the subject of invention similar to standard keyboard and mounted in the reach of index finger two sign keys. The version of keyboard with 10 sign keys was named Adv. In case of permanent assigning of one sign key to one index finger, even in the keyboard model having two keys under index finger, version called Bas, having only 8 sign keys is used. Index finger can than rest on the only key designed for it, similarly to middle, ring and little finger. On the keyboard built with bigger amount of sign or register keys a version utilizing smaller number of keys can be programmatically activated.

Different keyboard versions are shown in table 1. The total number of registers vary from 4 to 256 and the entire number of signs possible to input - from 32 to 2048 in Bas version or from 40 to 2560 in Adv version.

**Table 1**

| Keyboard version | Number of sign keys | Number of register keys | Number of registers | Number of signs |
|---|---|---|---|---|
| A-Bas | 8 | 2 | 4 | 32 |
| B-Bas | 8 | 4 | 16 | 128 |
| C-Bas | 8 | 6 | 64 | 512 |
| D-Bas | 8 | 8 | 256 | 2048 |
| A-Adv | 10 | 2 | 4 | 40 |
| B-Adv | 10 | 4 | 16 | 160 |
| C-Adv | 10 | 6 | 64 | 640 |
| D-Adv | 10 | 8 | 256 | 2560 |

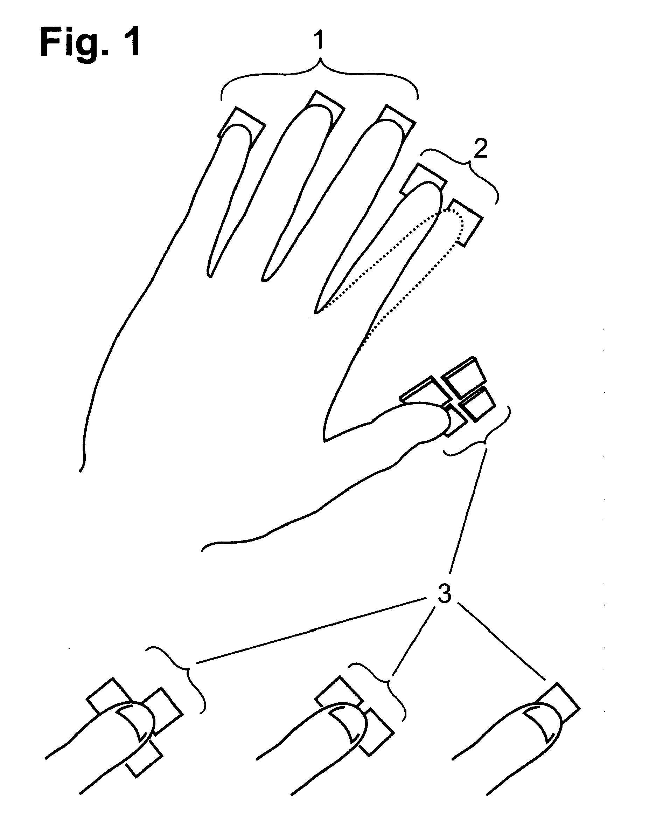

Fig. 1 shows schematically the method of inputting data into digital device. The position of fingers is marked with emphasis on the specificity of index fingers and thumbs usage. Fingers little, ring and middle operate sign keys 1 assigned to fingers permanently. Index fingers have got in their reach two keys 2 each and, depending on the version of used keyboard or program settings, two of them or only one can be in use in the role of sign key(s) and/or pointing device button(s). Each of thumbs operates register keys 3, which are in the number of one to four in the reach of each thumb, depending on applied keyboard version. Register keys 3 can also operate pointing device.

The essential novelty of the invention is the way of register keys activating, consisting in simultaneous pressing by thumb of several register keys. Register keys of both keyboard pieces are not doubled, so usage of two thumbs in the same moment get the opportunity to activate eight register keys and in consequence 256 registers (2^8=256). Big number of registers enables reduction of each register capacity to 10 signs. Despite this fact, maximal number of signs possible to be input is big (10*256=2560).

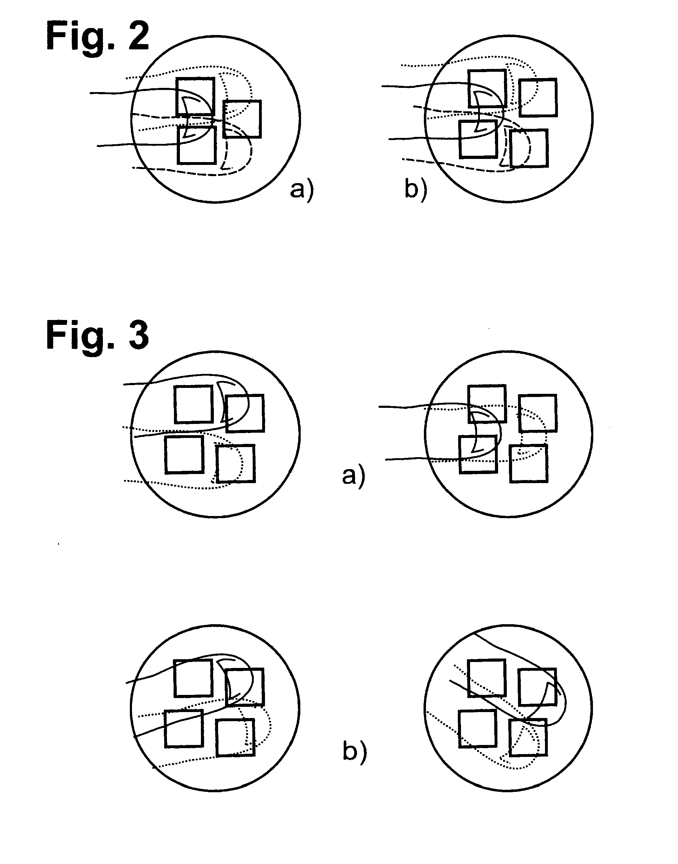

On figs. 2 and 3 there is shown that grouping of all register keys under two thumbs make the idea of new method of registers activating come true. Pressing of two keys in the group of three (keyboard version C) is shown on fig. 2a. Three keys can be pressed together by placing thumb at the central point of the group, above all three register keys. On fig. 2b there is shown the way of operating with keyboard version D, containing four register keys, set programmatically to version C, having than three meaningful register keys. On fig. 3 there is shown, how one can use thumb to operate on register panel of version D, having four register keys. Translocation of thumb slightly in directions up-down and forward-backward, enables simultaneous pressing of any number of register keys inside the group. Fig. 3a shows the way of pressing of two register keys, while fig. 3b - of three. Combinations of keys which make difficulty in use (for instance - keys lying diagonally in version D), while the majority of registers are empty, must not be in use or a special variation of key group build can be created, enabling pressing difficult combinations of keys.

In different models of keyboard, called: main, universal, glove, pocket, clothing and foot, various versions of keyboard can be applied, containing different number of register and sign keys. Each of proposed in the invention keyboard models can in principle have installed any keyboard version, in terms of keys number, however in some situations (for example in motion) or because of lack of place (for example in glove model) it is indicated to apply smaller number of keys. In table 2 there are shown recommended versions for diverse models of keyboard (in brackets - versions less suggested). There are also proposed types of pointing device, adequate for each model.

**Table 2**

| Keyboard model | Keyboard version recommended to keyboard model | Pointing device type suggested to keyboard model |
|---|---|---|
| Main | C-Bas, D-Bas, (C-Adv, D-Adv) | trackball, joystick, touchpad |
| Universal | C-Bas, D-Bas, (C-Adv, D-Adv) | trackball, joystick, touchpad |
| Glove | A-Bas, B-Bas, (A-Adv, B-Adv) | mouse, joystick |
| Pocket | A-Bas, B-Bas, A-Adv, B-Adv | joystick, trackball |
| Clothing | A-Bas, B-Bas, C-Bas, (D-Bas) A-Adv, B-Adv, C-Adv, (D-Adv) | joystick, trackball |
| Foot | D-Bas, D-Adv | trackball, joystick |

Presented in table 2 models can differ not only by version of applied keyboard and type of pointing device, but also by details of construction, such as modifications with permanent or detachable fixing of pointing device (models: main, universal and foot), place of keys mounting (glove model in modifications with keys being inside or outside of the material of glove), as well as by variations of construction of register keys group under thumb or sign keys group for index finger.

Because the invention comprises diversity of keyboard versions, models, modifications and variations, the keyboard described as main model will be discuss, made in exemplary build, according to the invention, as modification with pointing device mounted permanently, in the version D-Adv (with four register keys and five sign keys in each piece) and in the simplest variation of four register keys group construction and two sign keys under index finger, in which, keys inside group vary only by position.

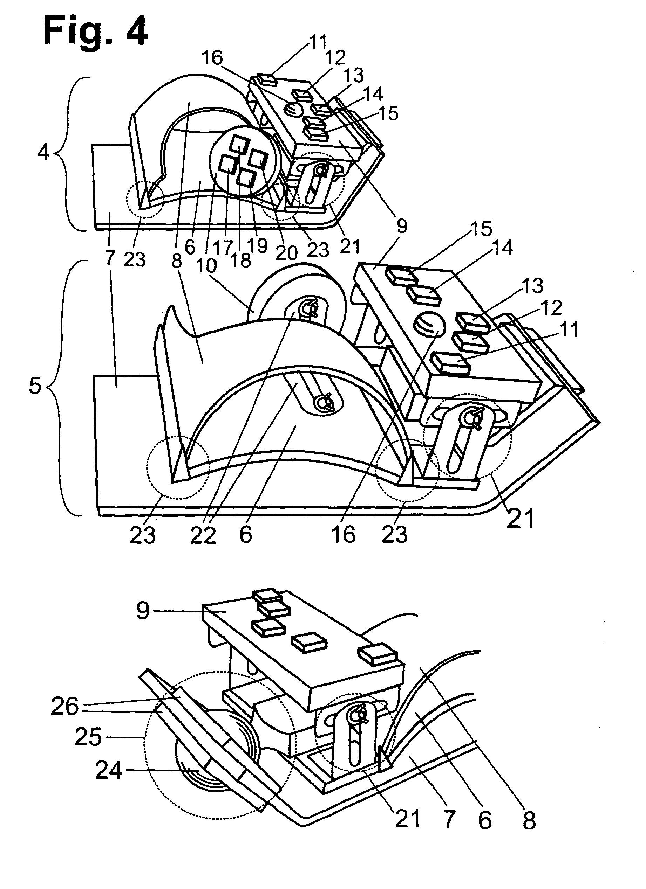

On fig. 4 main model of keyboard in D-Adv version is presented, comprising pieces left 4 and right 5. Each piece is assembled of three plates: basal plate 6, thigh plate 7 and palm plate 8. On basal plate 6 there are two panels: sign panel 9 and register panel 10. On sign panel 9 there are sign keys arranged semi-circularly 11, 12, 13, for fingers, accordingly: little, ring and middle and two sign keys 14, 15, for index finger, as well as pointing device 16 of trackball type, located on sign panel 9. Register panel 10 of each piece contain four register keys 17, 18, 19, 20, operated with thumb. Sign panel 9 is mounted on basal plate 6 with mechanism 21 of positioning and fixing of sign panel 9. Register panel 10 is mounted on basal plate 6 with mechanism 22 of positioning and fixing of register panel 10. On basal plate 6 in the system of stabilizing borders 23 convex palm plate 8, supporting palm, is settled. Mechanisms 21, 22 of positioning and fixing of panels 9, 10 allow to set angles and distances of panels 9, 10 in reference to palm plate 8. In the frontal part of basal plate 6 a ball 24 is fasten, being part of ball joint 25 coupling basal plate 6 with thigh plate 7. Thigh plate 7 is supplied with yoke 26 embracing ball 24 of ball joint 25. Ball joint 25 allows for setting basal plate 6 against thigh plate 7 under different angles.

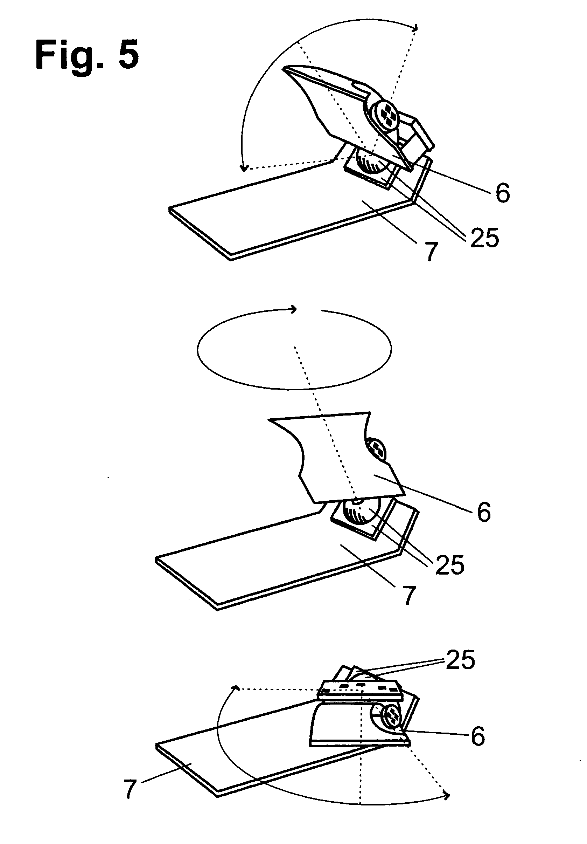

Fig. 5 visualizes ball joint 25, which allow for movability in three planes, enabling for positioning of basal plate 6 under different angles against thigh plate 7. This is crucial for placing the thigh plate 7 under the thigh of sitting person and adjusting the proper angle of basal plate 6 to allow comfortable position of palm.

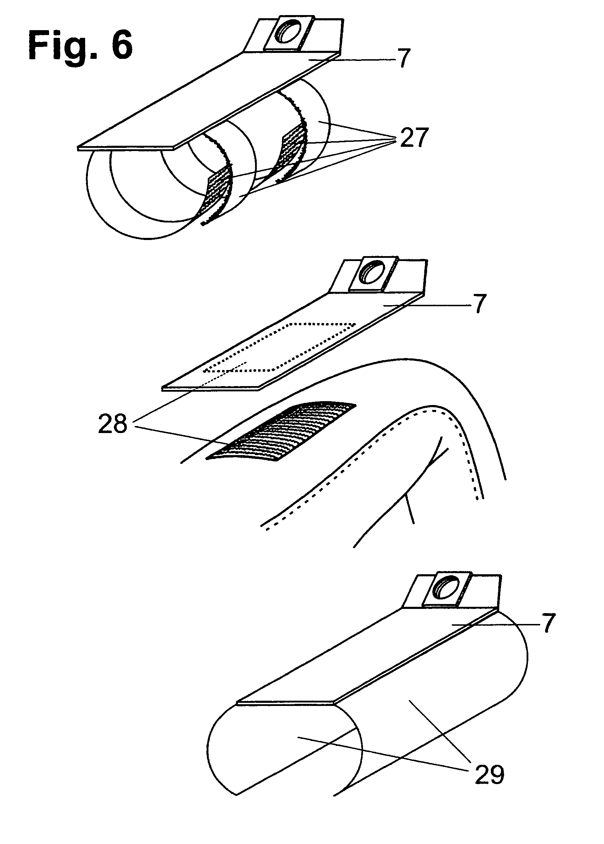

There are shown on fig. 6 few other methods of thigh plate fastening to operator's thigh with use of burr belts 27, burr patches 28 and springy clamping rings 29. These methods can be used in standing position and during walking, and also in sitting and lying position. During working on plane surface the thigh plate 7 can be dismounted.

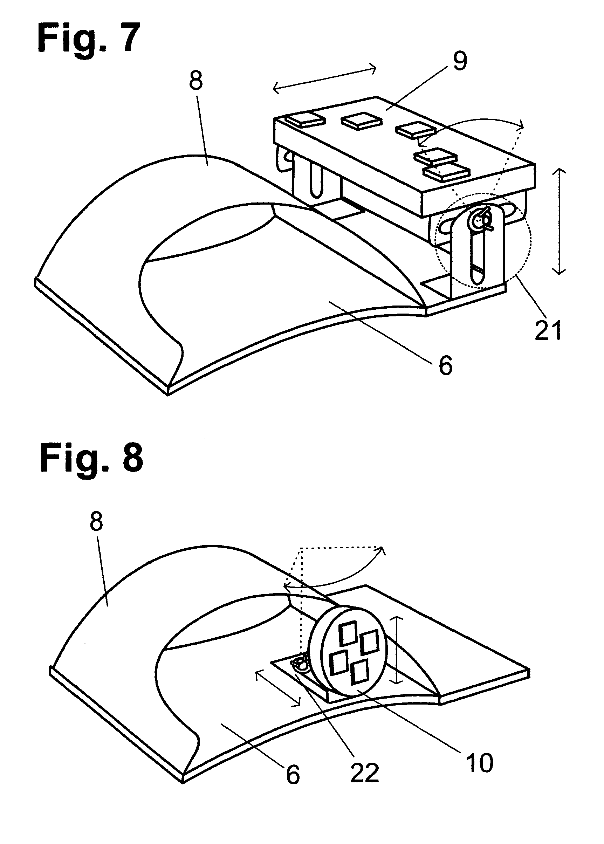

On fig. 7 movability of sign panel 9 against basal plate 6 is shown. This allows for adjusting the distance between sign panel 9 and palm plate 8, height of sign panel 9 above basal plate 6 as well as for angle of sign panel 9 changing. All these regulations ease adjustments to different size of hand and to proper position at work.

On fig. 8 movability of register panel 10 against basal plate 6 is shown. This allows for adjusting the distance between register panel 10 and palm plate 8, height of register panel 10 above basal plate 6 as well as for angle of register panel 10 changing. All these regulations ease adjustments to different size of hand and to proper position at work.

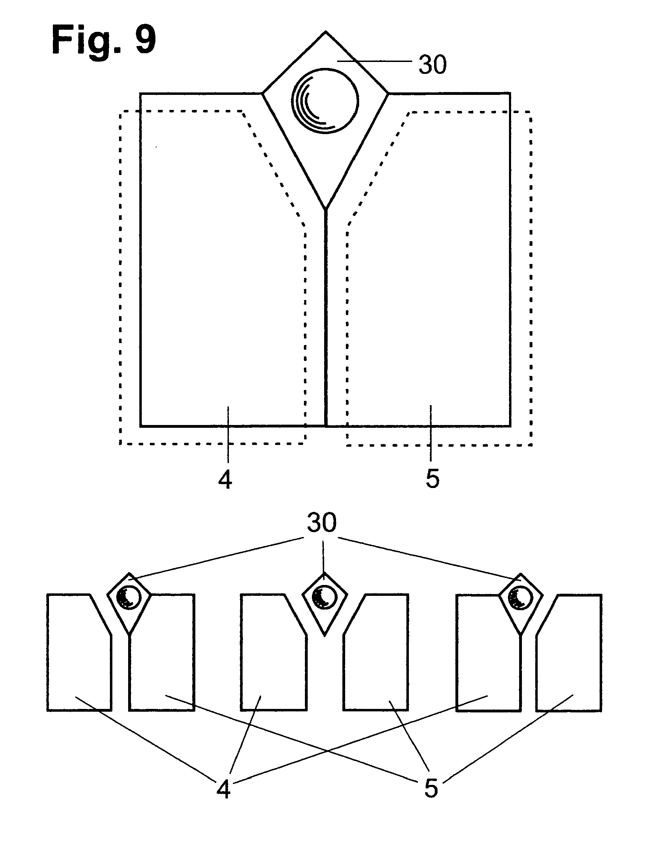

On fig. 9 schematic drawing of construction modification of models main or universal is shown, which comprises the possibility of connecting/disconnecting of two pieces of the keyboard 4, 5, as well as the possibility of connecting of pointing device panel 30 to one or both pieces of keyboard or its total disconnecting from both pieces.

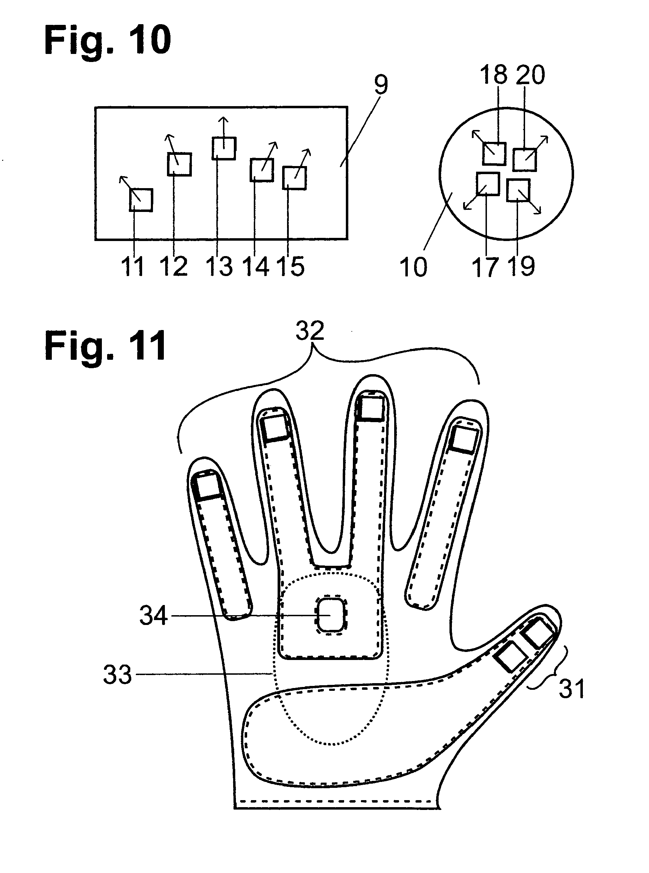

On fig. 10 the possibilities of keys regulation on universal model are shown. Arrows are showing possible movements of sign keys 11, 12, 13, 14, 15 on sign panel 9 and of register keys 17, 18, 19, 20 on register panel 10. Other details of universal model construction are similar to those of main model.

On fig. 11 glove model in version B-Bas is shown with two register keys 31 and four sign keys 32, all placed on the outer surface of the glove. In central part of inner palm surface a window 34 is made in the glove to enable operation of optical mouse 33 hidden inside glove.

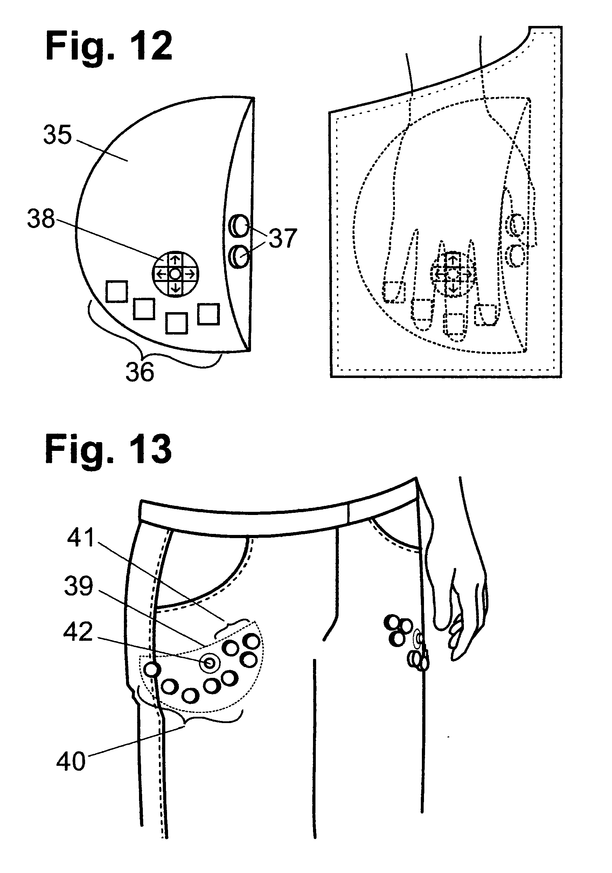

On fig. 12 pocket model is shown, with five sign keys 35 and two register keys 37 (version B-Adv) and with pointing device of joystick type 38.

On fig. 13 there is fragment of clothing (trousers) with keyboard 39 mounted under the surface of material and keys visible on the outer side of material: five sign keys 40 and three register keys 41 (version C-Adv) and with joystick 42.

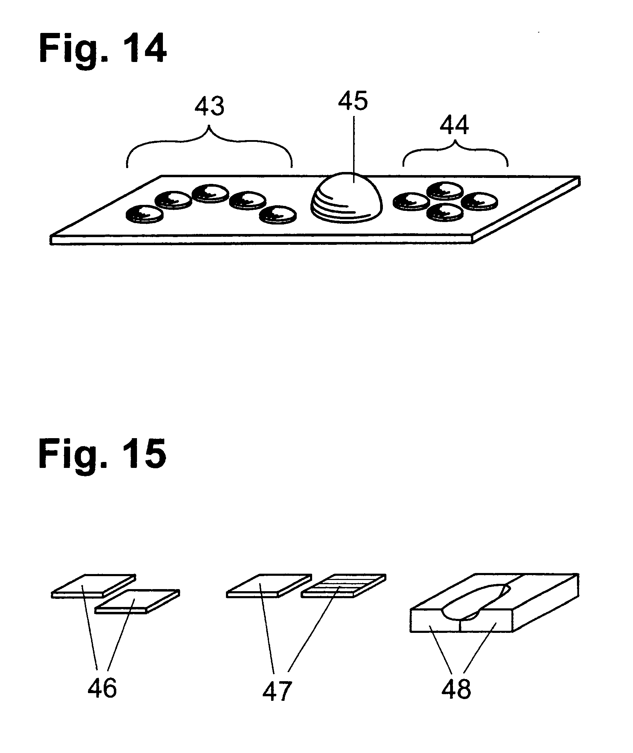

On fig. 14 simple foot model is shown with five sign keys 43 and four register keys 44 and with big trackball 45 mounted in the middle. Construction of foot model is similar to one piece of hand keyboard (left piece in this case). Signs layout may resemble the one for one-handed people using one piece of manual keyboard.

The following drawings show the variations of key group build. Register keys and index finger keys may be distinguished by position, texture, shape or all of these features. A special construction of key group serves also for better orientation.

On fig. 15 three variations of build of the group of two keys is shown, where keys are distinguished by position 46 , texture 47 and shape 48.

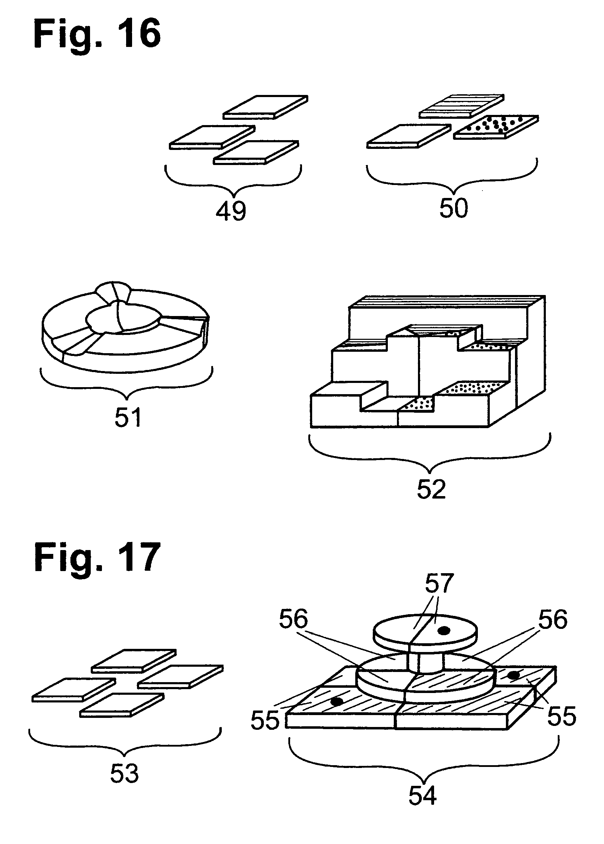

On fig. 16 four variations of build of the group of three keys is shown, where keys are distinguished by position 49 , texture 50, shape 51 and all these features 52.

On fig. 17 two variations of build of the group of four keys is shown, where keys differ only by position 53 or key group has got a special construction 54, easing palpable identification of keys. The set 54 has three floors: on the first there are four main keys 55; on the second - four keys 56 where each one allows for simultaneous pressing of three adjacent keys from the first floor; on the third floor there are two keys 57 enabling simultaneous pressing of two diagonally lying keys of first floor.

Keys of the keyboard being the subject of invention are not marked with letters like it is done on standard keyboards. During the job fingertips cover the keys, so marking them with signs would be inexpedient and missing main goals of keyboard: sightless typing and lowering the position of keyboard, which improves ergonomics.

In digital device cooperating with the keyboard, a dedicated program works, enabling keyboard operation. Algorithm of its functioning is as follows.

Main task of dedicated software is showing the registers content on the screen of digital device. It replaces labels on the keys. At rest, when no key is pressed, program shows at chosen part of the screen the content of main register. Signs of main register are pressed singularly, without register key pressing. In this state, program waits for input of single sign form main register.

To input sign placed in other register operator has to press register key or keys and simultaneously or slightly later a sign key. If operator knows in which register and under which sign key is the sign, he may press proper register key(s) with sign key. The user is not forced to remember location of all signs and commands. For person less fluent in typing program plays the role of a teacher. Pressing of register key(s) without following by a sign key causes, after a short adjustable time, appearing on the screen the register content adequate to pressed register key(s). If operator notices the needed sign, he may press the proper sign key. If however register was not right, operator can hold register key(s) a little longer and wait for displaying of the content of neighboring registers. If the needed sign is still absent in these registers, operator can hold register key(s) another moment longer for displaying all registers which are not empty. If there is still a failure of searching for the sign, after another short time program goes to edition mode, showing on the screen table of Unicode (or the like) signs and the whole table of user's layout. User's keyboard layout can now be modified and signs till now omitted can be placed in user's table.

Length of periods between display changing are adjustable. Number of neighboring registers is also to declare. These and other settings can be done in edition mode. Times can be automatically, dynamically changed according to the speed of typing.

Register is visible on the screen as single row of signs, possibly with tabular lookout. In the fields of the table there are letters and other commands and also, preferably in graphic mode, the register keys, necessary for actuating given register. When neighboring or more registers are displayed, they occupy more lines of screen.

Sign fields in registers, responding to specified sign keys, can be filled with a content other than letters, digits and symbols. They can contain system commands, commands of used program application, cursors or sets of signs. Among the latters digraphs, syllables, frequent or difficult words, functions, macros, texts (lines of program, correspondence formulas, date, signature and so on) are possible.

Diverse alphabets, based on Latin letters, taking into account their additional national signs, are sets of a few tens and together with system and program commands, they can occupy, roughly counting, a dozen of registers. When we use keyboard with six register keys (C-Adv) we have 64 registers, and most of them would be empty. Register keys combinations corresponding to empty registers can be utilized to special tasks. Dedicated program gives the possibility of prescribing to empty registers any function, command or letter, making it possible to be actuated by pressing only register keys combination, without sign keys.

Additionally, program gives the opportunity to declare the division between superior and inferior register keys called hierarchic dependence. Longer pressing of superior key(s) change the status of inferior keys and from this time on content of all inferior registers can be inputted without necessity of superior keys pressing. This method is similar to CapsLock method and can be used when operator intends to use other group of registers for a certain time. Good examples are: changing between different alphabets (important for transducers), between diverse programming languages or changing between text editing, counting, game playing.

Dedicated software allows for declaring the combination of keys which will start the functioning of pointing device and declaring the keys which will operate the pointing device. This can be also achieved by assigning to mouse (or the like) the empty registers keys combinations or superior keys, which can switch the system to the mode of sophisticated, multi-button mouse operating.

All the settings introduced by operator, including keyboard layout, presence of special tasks inside registers content, functioning settings of keyboard and so on, can be saved in a short file and transferred on any digital memory carrier to any other digital device, sent by mail, made accessible in the net or sent by short distance wireless communication to nearby equipment. This enables using of the own operator's layout in any computer or other digital device. There is no need to force the whole digitalized society to change to any new layout or hold by an old standard.

As it was previously mentioned, registers may be filled with signs in any pattern. Author of this solution encourages users to create own layouts, adjusted to personal needs. Each user can create many different layouts, depending on his versatile tasks or create a unique layout which, thanks to the system of keys hierarchy, can fulfill the needs of creator. In the following part of description exemplary layouts of keyboard are discussed.

In the solution called Semi-Qwerty shown in table 3, stress was put on simulating Qwerty layout. The version of the keyboard described by C-Adv symbol was used (three register keys, five sign keys under each hand). Three register keys are called upper, lower and external. Main row of this layout contain the same signs as middle row of standard Qwerty keyboard: a, s, d, f, g under left hand, h, j, k, l, ; under right. With upper left hand register key upper letter row from Qwerty keyboard is input; with lower left hand register key - lower row. Signs of Qwerty numeric row are input with upper right hand register key, diacritical national signs - with lower right hand key (similar to Polish programmer layout using RightAlt).

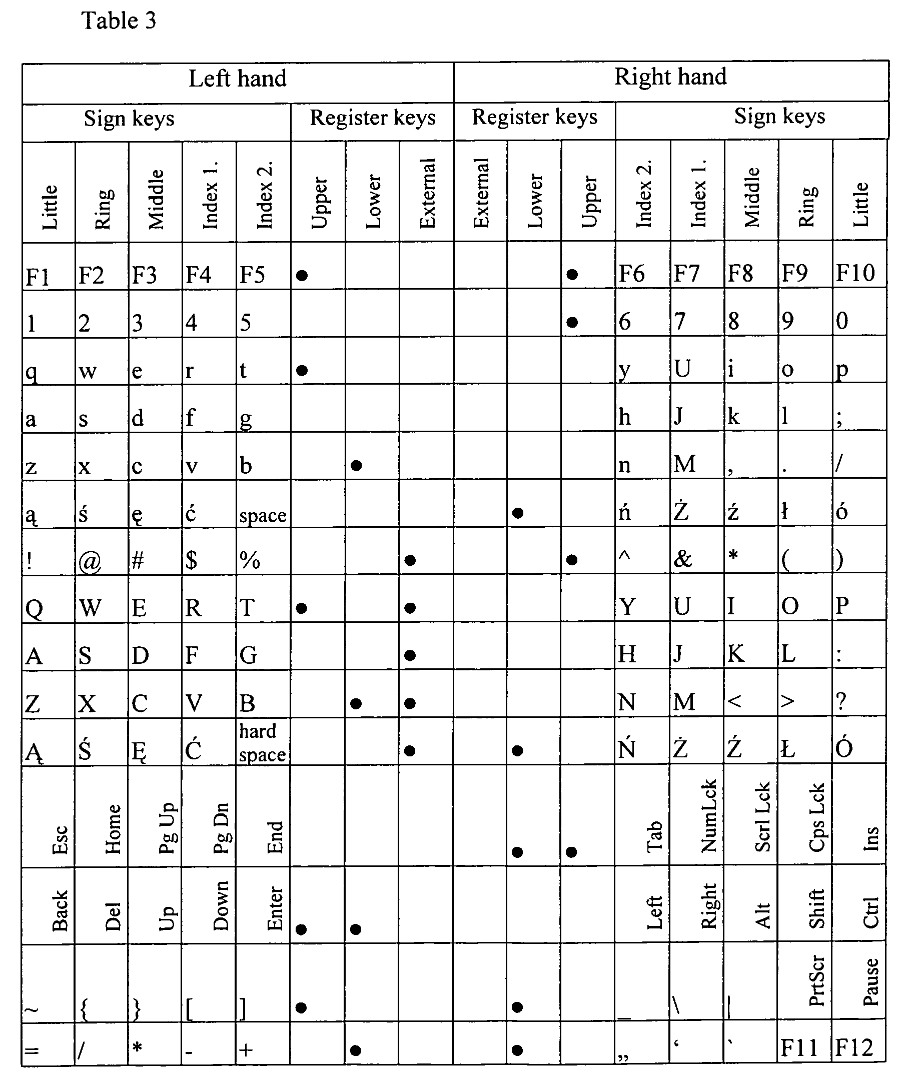

In the register containing nine Polish diacriticisized letters there was an empty field, which is now dedicated to space - the most frequent sign in text edition. It is worthy of notice that till now only five registers are occupied. These are the easiest registers actuated with none or only one register key. They contain the most important signs in text edition. Big letters, symbols and punctuation marks are placed in registers analogical to their original position, requiring pressing only one additional register key - external left hand register key, which resembles this maneuver to Shift key press in Qwerty keyboard.

In other registers being combinations of upper and lower register keys the rest of punctuation marks, symbols, function keys, commands and cursors are present. There are 15 registers occupied, which means 150 signs. There are 49 other registers with 490 empty fields to utilize. They can be used by diacritical signs of other Latin alphabets, which needs maximum two-three registers for each alphabet. So, in this method, where basic Latin letters are not repeated, we've got place for dozen of divers alphabets.

Preparing keyboard layout for mobile device one should notice, that there are approximately 15 registers needed for all signs of standard keyboard, as it was shown in Semi-Qwerty layout. Mobile device layout should be characterized by small number of keys. Using four register keys (two under each thumb), 16 registers can be operated, which enables placing signs and commands of standard keyboard. Using keyboard version signed B-Adv the whole Qwerty keyboard can be activated. With a small amount of skill in packing or omitting useless commands version B-Bas, with four sign keys under each hand, having 128 sign fields can also be used.

For a very place-sparing applications, for example for cell phone, further reduction of register keys may be necessary. The smallest versions having only two register keys enable for activating four registers with 40 (A-Adv) or 32 (A-Bas) fields. Some signs, like big letters or national characters can be input with other program method and keyboard with only one register key at each side will also act.

Other method of letters alignment may be division on vowels under one hand and consonants under another. From the beginning of typewriter era, keyboard layout creators were trying to separate vowels from consonants. There are circa 40% of vowels in most of languages, so at each group of five letters there are two vowels. Leaving out vowel diphthongs which are relatively rare, this means, that after almost each vowel stands consonant and after consonant vowel is present two on thee times.

If one consider space as vowel, the frequency of vowels and consonants would be in many languages comparable. For faster writing alternating operation of right and left hand is crucial. Therefore separation of vowels and consonants is functionally reasonable. August Dvorak constructed layout utilizing this observation before II World War. Until now Dvorak layout has its admirers, though it has not become a widespread standard.

When constructing layout differing from Qwerty, there is no necessity of five keys usage under each hand, which encourages to use eight sign keys only - version Bas of keyboard. According to the latter theoretical reasoning, space is treated in this solution as vowel and placed in main register under index finger of left hand (table 4). Beside vowels, five less frequent consonants are placed under left hand. In main register of right hand the most frequent in English consonants have taken place. Often used keys, such as Enter, Backspace, Delete, Tab are situated among letters in convenient places, under index finger. It is worth remarking, that numeric panel is arranged compactly and basic arithmetic signs and zero are packed in a single register. Function keys, cursors and punctuation marks are placed similarly. Special signs and all brackets are assembled each group in one register. Brackets are organized in order of importance, beginning from index finger. Opening brackets are under left, closing under right hand.

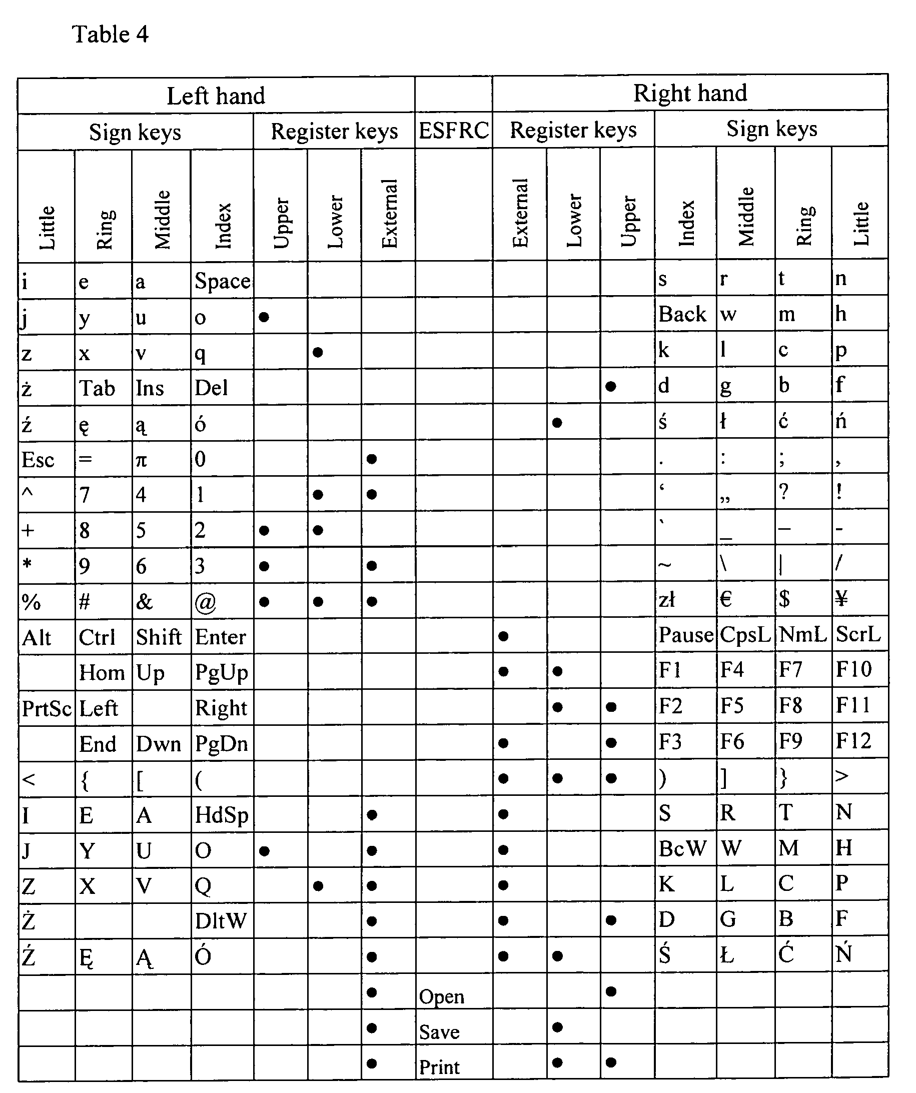

In the above printed table 4, there are several atypical for standard keyboard commands, for example deleting the whole word forward and backward (DltW, BcW) and hard space (HdSp); free fields of the table encourage to locate there other useful in text editing commands.

In lower lines of the table commands are placed, which are not standard for Qwerty keyboard: Open, Save, Print. Empty sign fields (ESF) in these registers, mean, that pressing a combination of register keys responding to the given register activates assigned to the whole ESF register command (ESFRC).

Another method of signs dislocation is mnemotechnic approach. Though the dedicated program cooperating with the keyboard serves the user continuous help in showing signs placed in registers, however to achieve quick touchtyping, memorizing of keys positions would be necessary. In this purpose a mnemotechnic layout of sign fields may be useful. The idea is fulfilled by the method of placing six 4-letter words in six halves of letter rows. The following Polish words solve the task: GRAM, KWEF, PNIJ, VOLT, BUCH, DYSZ. Only rare in Polish language letters Q and X should be placed in other register. Preparing similar set of English or other language words should not be difficult for native speakers. In Polish it is also possible to arrange eight words including diacritisized letters: SPIK, HUCZ, SOND, FELG, ŻÓ 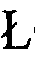 Ć, JAŹŃ, R 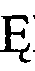 BY, M 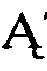 TW.

For didactic purpose advantageous could be phonetic sign layout. There is no restriction caused by digraphs, which were not possible to input using standard keyboard, so phonemes like dz, rz, sz are easy to operate. Such layout may also be preferred by ear-minded persons, for whom position of sounds under given register key, responsible for given phonetic feature would ease to remember layout.

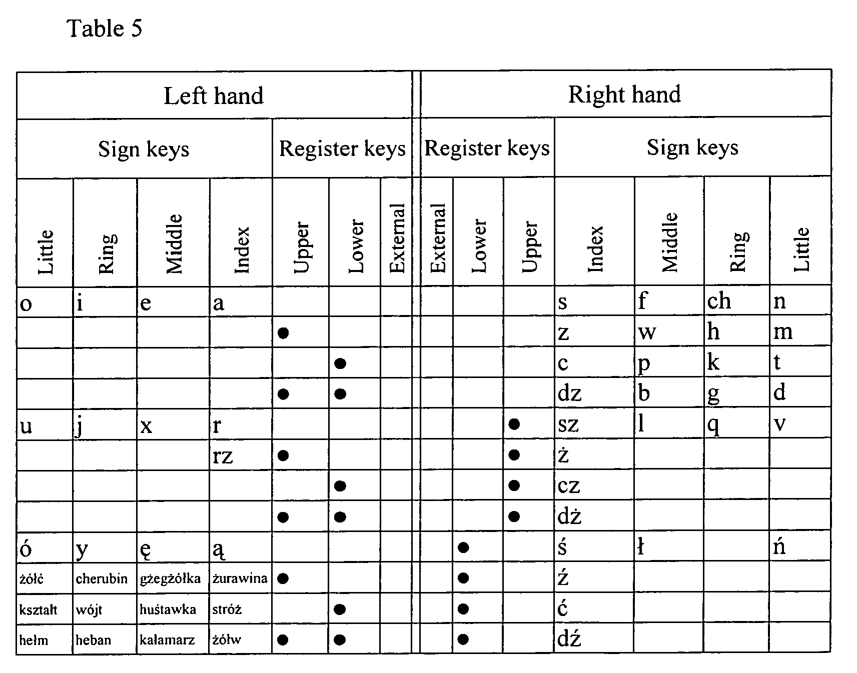

In this way Polish phonemes are organized in table 5. All sibilant sounds are gathered under one key, operated by index finger of the right hand. Presence or absence of three main phonetic features determine whether to press or not to press one of three register keys responsible each for one feature. In similar way other consonants are organized. Diacritisized vowels were placed under the same sign key as their Latin precursor with joint pressing of register key responsible for "ogonek".

In the lowest left corner of table 5 there are examples of orthographically difficult words, which are input to active application in the same way as single letter. Registers can also be filled with long, frequent or important words, phrases, sentences and so on.

The above table contain only part of possible real layout; big letters and other signs were omitted in aim not to dim the main displacement pattern.

For some purposes almost all registers have to be used. Such demands may exist during multilingual translations. In such keyboard possibility of quick alphabet changing should be present. Additionally, alphabets should not be operated with use of advanced register keys combinations. This can be satisfactorily fulfilled by implementation of hierarchical feature of the system. One can destine exemplarily eight registers for each alphabet (64 - 80 signs), which is enough for placing there all letters of national alphabet: Latin and diacritisized. Eight registers can be actuated by three register keys. Version C of keyboard has 6 register keys and 64 registers. This version is fitting to our purpose, because three register keys can be assigned as superior, and three as inferior. Pressing any combination of superior register keys activates the group of 8 registers with the whole alphabet of one language. It is not difficult to notice, that there are 8 such groups of 8 registers. In one group an international stuff may be placed: digits, commands, functions, cursors, macros and other. Seven register groups can contain 7 national alphabets together with some important keyboard commands like Enter, Backspace, Delete, Escape as well as editing signs, like half pause, not dividing hyphen, long space, hard space, which are unfortunately rarely used, cause they are hidden deeply in the stomach of computer.

Ideographic signs of East Asian languages are numerous, therefore they need the most elaborated keyboard, having 8 register keys and 10 sign keys. Keyboard version D-Adv has got 256 registers and 2560 signs. This is sufficient space for placing all three Japanese writing systems: kanji, katakana, hiragana. For Chinese there will be necessary to make 3-4 separate D-Adv based layouts (grouping signs often and seldom used). Hierarchic organization of registers will ease the way of Japanese kanji and Chinese signs arrangements in groups leaned on the basic (superior) sign, under which derived (inferior) signs are placed.

For inputting much more signs, not surpassing the number of four register keys under each thumb, the mixed keyboard can be used, comprising manual D-Adv version and foot keyboard. The foot keyboard can be in this situation a simple one, for example having two register keys under one foot and three sign keys under the second, which would enlarge the total number of sign fields to (10+3)*2^(8+2)=13*2^10=13*1024=13312.

The full foot keyboard (7 sign keys and 4 register keys) with the full manual one (D-Adv) allow to input (10+7)*2^(8+4)=17*2^12=17*4096=69632 signs.

About 30 registers are necessary to construct syllabic layout. This will contain all existing in any language digraph (vowel-consonant) syllables and limited number of other, the most frequent for the language letter combinations and/or entire often used words. The layout similar to Japanese kana tables, comprising existence of vowel always in the same column (under the same sign finger) and consonant always in the same row (under the same register keys combinations), giving syllable on the intersection of column and row - enables realization of syllabic writing.

Dysfunction or lack of one or several fingers, as well as the lack or paralysis of the hand forces to create the layout in which fields (columns) destined for disabled finger or hand are omitted. Such layout must be fitted to the unique need of disabled person and should rely on convenient dislocation of signs. A particular solution is the layout omitting one whole hand. One-sided lack of register and sign keys reduce the capacity of the system to 16 registers and 5 sign keys (unilateral D-Adv version), which allow to administer 80 sign fields. If some signs, for example big letters are inputted with programmable (CapsLock-like) method, this number of sign fields would be sufficient.

This invention gives opportunity to operate keyboard by people without both hands. For this purpose the foot model of keyboard is intended, equipped with big keys, operated on the floor by legs. In such model the best keyboard version is the one having four register keys under right foot and five sign keys under left one. This allows for inputting 5*2^4=80 signs which correspond to unilateral D-Adv version, like for one-handed people. The enlargement of total field amount is possible by using seven sign keys. This full foot keyboard enables using of 7*2^4=112 signs. Foot keyboard can be used also by non-disabled people, for example needing to make simultaneous job with hands, or needing more keys, what was mentioned by East Asian digital calligraphy. Some disabilities for example hemiparesis may need a keyboard with one piece for hand and one for foot. Recovery after all types of pareses or paralyses are also applications of the invented keyboard which are difficult to overestimate. This is because the keyboard being the subject of this invention is putting stress on the easiness, functionality, ergonomics and comfort of operating.

### List of construction parts

- 1 -: Sign electrical switches operated by little, ring an middle fingers
- 2 -: Sign electrical switches operated by index finger
- 3 -: Register electrical switches operated by thumb
- 4 -: Left piece of keyboard
- 5 -: Right piece of keyboard
- 6 -: Basal plate
- 7 -: Thigh plate
- 8 -: Palm plate
- 9 -: Sign panel
- 10 -: Register panel
- 11 -: Sign keys operated by little fingers
- 12 -: Sign keys operated by ring fingers
- 13 -: Sign keys operated by middle fingers
- 14 -: Sign keys operated by index fingers
- 15 -: Sign keys operated by index fingers
- 16 -: Pointing device
- 17 -: Register keys operated by thumbs
- 18 -: Register keys operated by thumbs
- 19 -: Register keys operated by thumbs
- 20 -: Register keys operated by thumbs
- 21 -: Mechanism of sign panel positioning and fixing
- 22 -: Mechanism of register panel positioning and fixing
- 23 -: System of borders stabilizing palm plate
- 24 -: Mounted on basal plate ball of ball joint
- 25 -: Ball joint connecting thigh plate to basal plate
- 26 -: Mounted on thigh plate yoke of ball joint
- 27 -: System of thigh plate fixing to operator's thigh - burr belt
- 28 -: System of thigh plate fixing to operator's thigh - burr patch
- 29 -: System of thigh plate fixing to operator's thigh - springy clamping rings
- 30 -: Pointing device detachable panel
- 31 -: Register keys of glove model
- 32 -: Sign keys of glove model
- 33 -: Optic mouse of glove model
- 34 -: Window of optic mouse of glove model
- 35 -: Pocket model plate
- 36 -: Sign keys of pocket model
- 37 -: Register keys of pocket model
- 38 -: Joystick of pocket model
- 39 -: Clothing keyboard model
- 40 -: Sign keys of clothing model
- 41 -: Register keys of clothing model
- 42 -: Joystick of clothing model
- 43 -: Sign keys of foot keyboard
- 44 -: Register keys of foot keyboard
- 45 -: Trackball of foot keyboard
- 46 -: Two register keys distinguishable by position
- 47 -: Two register keys distinguishable by texture
- 48 -: Two register keys distinguishable by shape
- 49 -: Three register keys distinguishable by position
- 50 -: Three register keys distinguishable by texture
- 51 -: Three register keys distinguishable by shape
- 52 -: Three register keys distinguishable by all above features
- 53 -: Four register keys distinguishable by position
- 54 -: Four register keys distinguishable by special construction of keys group
- 55 -: Four (main) register keys situated in the lowest level inside the keys group where keys are distinguishable by special construction of the group
- 56 -: Register keys of medial level, each causing simultaneous activating of three keys of the lowest level
- 57 -: Register keys of the highest level, each causing simultaneous activating of two keys of the lowest level lying diagonally

## Claims

1. Method of inputting data into digital devices, stationary and mobile, having installed computer software and pointing device, using sign electrical switches and, changing the role of sign electrical switches, register electrical switches, activated with four fingers and thumb of each operator's hand, **characterized by** using of up to five sign electrical switches, situated within the reach of four except thumb fingers of each operator's hand, pressed either separately or together with register electrical switch(es), and **characterized by** using register electrical switches, changing the role of sign electrical switches, situated, in the number of up to four, in the reach of thumbs of each operator's hand, activated in the number of up to four by single press of a thumb or up to eight by simultaneous pressing of both thumbs, and further **characterized by** using pointing device built in permanently or in a detachable way, operated by electrical switches, and **characterized by** installing a dedicated software in the digital device.

2. Method, according to claim 1, **characterized by** operating sign electrical switches, placed preferably on two separate keyboard pieces designed for each operator's hand, situated within the reach of little, ring, middle and index fingers in the way not requiring any visual control of switches, while it is possible actuating two sign electrical switches by index finger, and operation of the rest of sign electrical switches, situated within the reach of little, ring and middle fingers do not require moving fingers to other sign electrical switches.

3. Method, according to claim 1, **characterized by** operating register electrical switches, changing the role of sign electrical switches, placed preferably on two separate pieces of keyboard designed for each operator's hand, in groups inside which up to four register electrical switches, changing the role of sign electrical switches, can be activated by single press of a thumb, which enables, by simultaneous use of both thumbs, activating of one of 2ⁿ registers, where n is the total number of applied register electrical switches in both pieces of the keyboard.

4. Method, according to claim 1, **characterized by** operating a pointing device, placed in the proximity of electrical switches, within the reach of operator's fingers, built in one or both pieces of the keyboard, permanently or in a detachable way, while one or more electrical switches play the role of pointing device button(s) and/or the role of electrical switch(es), depending on program settings.

5. Method, according to claim 1, **characterized by** using as an electrical sign or register switch a key built as either mechanical electric contact switch or reed switch, or optoelectronic element, or touch/stress sensor, and **characterized by** using a pointing device in form of either mouse or trackball, or joystick, or touchpad.

6. Method, according to claim 1, **characterized by** using installed in the digital device a dedicated computer software, which on the screen of digital device, stationary or mobile, displays the content of register corresponding to pressed either single register electrical switch or combination of register electrical switches, further **characterized by** facilitating learning of signs layout, searching and inputting signs, enabling edition of registers content and edition of functioning settings of the whole set of electrical switches and also **characterized by** allowing to be adjusted for operation by people with disabilities of one or more fingers or the whole hand.

7. Keyboard for inputting data into digital devices, stationary and mobile, said digital devices having installed any computer software and a pointing device, said keyboard consisting of sign keys and register keys, said keyboard **characterized by** its composition of two preferably separate pieces /4, 5/, each piece of keyboard containing thigh plate /7/, connected by ball joint to basal plate /6/ and said keyboard further consisting of mounted on basal plate /6/: palm plate /8/, sign panel /9/ and register panel /10/, while in the reach of fingers of each operator's hand there are up to five sign keys /11, 12, 13, 14, 15/, located in one semicircular row on sign panel /9/ and up to four register keys /17, 18, 19, 20/, located on register panel /10/, changing the role of sign keys /11, 12, 13, 14, 15/, said register keys grouped in the reach of thumb of each operator's hand in the way that up to four register keys /17, 18, 19, 20/ can be activated by one thumb press, which by simultaneous use of two thumbs causes activation of one of 2ⁿ registers, where n is the applied number of register keys /17, 18, 19, 20/ in both pieces /4, 5/ of keyboard, and said keyboard further connected with a pointing device /16/, built in permanently or in a detachable way, operated by sign keys /11, 12. 13, 14, 15/ and/or register keys /17, 18, 19, 20/, while the said keyboard cooperates with dedicated software installed in digital device, using for connection with digital device any kind of wire or wireless method.

8. Keyboard, according to claim 7, **characterized by** having up to four keys inside the group of register keys /17, 18, 19, 20/ and/or two sign keys /14, 15/, being in the reach of index finger, with features enabling for their spatial and palpable identification, such as different position /46/, /49/, /52/, /53/ and/or different texture /47/, /50/, /52/, and/or different shape /48/, /51/,/52/, and/or special construction inside the group /54/, which features enable sightless pressing with one thumb of up to four register keys (17, 18, 19, 20) at a time or with one index finger of up to two sign keys /14, 15/.

9. Keyboard, according to claim 7, **characterized by** having sign keys /11, 12, 13/ being placed within the reach of little, ring and middle fingers in the way which does not require moving finger to another sign key enabling sightless pressing of sign keys /11, 12, 13/ while the rest of sign keys /14, 15/, activated also sightlessly, are situated in two groups of two keys in the reach of each index finger, which requires to move index finger while choosing sign key or which requires programmatic switching off of one of keys situated in the reach of index fingers.

10. Keyboard, according to claim 7, having, in one or both pieces /4, 5/ built in permanently or in a detachable way, a pointing device /30/ in form of either trackball or mouse, or touchpad, or joystick, said keyboard **characterized by** cooperating with pointing device using one or several sign and/or register keys, designed programmatically for temporary or permanent cooperation with pointing device.

11. Keyboard, according to claim 7, **characterized by** cooperating with dedicated software, which on the screen of digital device, stationary or mobile, displays signs corresponding to sign keys /11. 12. 13. 14. 15/, said signs being present in register corresponding to register key /17, 18, 19, 20/ or combination of register keys /17, 18, 19, 20/ being pressed, and further said software facilitates learning of signs layout, searching and inputting signs, enables edition of registers content and edition of functioning settings of said keyboard and allows to be adjusted for operation by people with disabilities of one or several fingers, or hand.

12. Keyboard, according to claim 7, **characterized by** being built in different sizes and/or with mechanism /21/ allowing for adjustment of position and angles of sign panels /9/, and/or mechanism /22/ allowing for adjustment of position and angles of register panels /10/, and/or with adjusted positions of sign keys /11, 12, 13, 14, 15/ on sign panel /9/ and/or said keyboard built with adjusted positions of register keys /17, 18, 19, 20/ on register panel /10/, and/or with the system of mounting /23/ of palm plate /8/ on basal plate /6/, and/or with the ball joint /25/ consisting of yoke /26/ and ball stud /24/ enabling for movability of basal plate /6/ against thigh plate /7/.

13. Keyboard, according to claim 7, **characterized by** containing sign keys /32/ and register keys /31/ fastened to the cloth of gloves in the reach of fingertips, inside or outside of the gloves, while pointing device, preferably mouse /33/, is mounted to the cloth of gloves in central region of palm or said keyboard **characterized by** having sign and register keys mounted in a car in the reach of driver's hands, preferably on steering wheel or at motorcycle or bicycle, preferably on handle-bar.

14. Keyboard, according to claim 7, **characterized by** having sign keys /36/ and register keys /37/ mounted on a plate /35/ being inserted to the pocket of operator's clothing or fastened in operator's pocket permanently and it is equipped in pointing device, preferably joystick /38/, also said keyboard in other embodiment, **characterized by** the fact, that it is fastened to operator's clothing in the way, that sign keys /40/ and register keys /41/ as well as the pointing device, preferably joystick /42/, are seen on the outer side of clothing or they are felt under the surface of clothing in a convenient place, preferably in the region of upper part of thigh at the frontal-outer side.

15. Keyboard for inputting data into digital devices equipped in any computer software and a pointing device, containing sign keys and register keys, **characterized by** containing from three to ten big sign keys /43/, designed to be operated with one foot of operator and contains from two to four big register keys /44/, designed to be operated with the second foot of operator with possibility of simultaneous activating up to four register keys with one foot press, and said keyboard contains pointing device, preferably trackball /45/, mounted permanently or temporarily, and said keyboard is **characterized by** cooperating with dedicated software, which on the screen of digital device displays corresponding to sign keys /43/ signs existing in the register corresponding to pressed register key /44/ or combination of register keys /44/, and further said software facilitates learning of signs layout, searching and inputting of signs, enables edition of registers content and edition of functioning settings of said keyboard and allows adjustments of said keyboard to permit operating by persons having disabled or absent hands or people who can not use hands during the work with keyboard.
